# EUROPEAN PATENT APPLICATION

(11) **EP 1 973 072 A1**
(43) Date of publication of application: **24.09.2008**
(21) Application number: 07009408.1
(22) Date of filing: 10.05.2007
(51) Int. Cl.: G06Q 30/00

(54) **Virtual information technology assistant**

(30) Priority: 26.01.2007 US 699211
(71) Applicant: Accenture Global Services GmbH, 8200 Schaffhausen (CH)
(72) Inventor: Bodart, Andrew J., Murray Hill New Jersey 07974 (US); Olsen, Joanna, Danville California 94526 (US); Pramer, David M., E. Norwalk Connecticut 06855 (US); Spence, Josephine L., San Ramon CA 94583 (US); Leake, Tanya S., Oakland,California 94610 (US)
(74) Representative: Müller-Boré & Partner Patentanwälte

(57) **Abstract**

A unified support system is adapted to a user to manage his or her entire personal electronics environment. The system supports a wide range of hardware, software and network configurations, as well as a vast universe of additional products and accessories that may be added to the user's personal electronics environment. The unified support system employs a multi-modal interface incorporating multiple communication channels for interfacing with a system user. The unified support is adapted to provide purchase decision support, customized new product installation instructions, new product and ancillary product recommendations, warranty registration, troubleshooting assistance, proactive maintenance, as well as other functions for managing a user's personal electronics environment.

## Description

### BACKGROUND

The present invention relates to a system for assisting users in managing their personal information technology/electronics environments. As technology advances, consumers are often inundated with new consumer electronics, communications, and information technology products and services. More and more peoples' homes are host to sophisticated networks of interconnected components. Once stand alone systems like televisions or stereos are now integrated and interconnected with other products in ways never envisioned even in the not too distant past. Today audio and video content are received from any number of different sources such as broadband cable connections, satellite dish antennas, portable data storage devices such as CDs and DVDs, and Digital Video recorders to name but a few. Furthermore, with the advent of in-home wireless networks such as Bluetooth and Wi-Fi, the personal computer is increasingly becoming the primary control center for many peoples' personal electronics environments.

While the consumer electronics and communications services markets explode with new product and service offerings, keeping up with the latest technology and keeping existing systems up and running can be a daunting task for the average consumer. The increasing complexity of most peoples' electronics environments requires an increasing level of technical acumen among consumers to set up their systems and keep everything running - a level of technical acumen that many consumers simply do not possess. Under these circumstances, managing a personal electronics environment can be a thankless and near impossible job. Adding new components, getting diverse components to work together, maintaining equipment, and troubleshooting problems can take hours of time, and time is a commodity that most consumers don't have enough of.

Substantially everyone's personal electronics environment is unique. One person may have a first brand of television and another person may have a second brand. One person may store all her music on a portable MP3 player, while another is devoted to listening to his old LPs on an analog turntable. Because of the wide diversity of available products and personal preferences in the selection of consumer products, creating a centralized management system for managing the personal electronics environments of multiple users poses significant technical challenges. A system is needed that takes into account each user's unique environment, and provides solutions, recommendations and management services specifically tailored to each user's individual circumstances. Furthermore, such a system must be readily accessible and must be able to meet a user's requirements at any time of the night or day.

### BRIEF SUMMARY

A unified support system is adapted to assist a user in managing his or her entire personal electronics environment. The system supports a wide of range hardware, software and network configurations, as well as a vast universe of additional products and accessories that may be added to the user's personal electronics environment. The unified support system employs a multi-modal interface incorporating multiple communication channels for interfacing with a system user. The unified support system may be considered a Virtual IT Assistant that is always available to help the user manage his or her electronics environment. The Virtual IT Assistant is adapted to provide purchase decision support, customized new product installation instructions, new product and ancillary product recommendations, warranty registration, troubleshooting assistance, proactive and reactive maintenance, and a host of other functions that will become clear upon reading the detailed description of the invention.

According to an embodiment, a system for managing an electronics environment includes a first database for storing user profile data. The user profile data may include the components that make up a user's electronics environment, as well as configuration data describing the manner in which the various components are connected with one another and various operating parameters associated with the components. The user profile data may also include the user's usage behaviors regarding the components within the user's electronics environment, as well as demographic and household information, and information regarding user preferences and the like. A second database is provided for storing data regarding products available on the market and which may be added to the user's personal electronics environment. The product data may include data relating to the product's compatibility with other devices and media and interconnection requirements. The product data may further include information about common issues that users may face setting up and using the product to assist in self-service diagnosis, troubleshooting, and repairs. Finally, a processor is provided. The processor is adapted to compare the compatibility and interconnection data of a specified product with the components and configuration data of the user's electronics environment. The processor determines whether the specified product is compatible with the electronics environment, and if not, what additional products are required to make the product compatible with the user's existing electronics environment. The processor has the ability to assist the user in selecting an appropriate product when several potentially compatible products are available to fill a particular need. The processor may select the appropriate product by referencing the user's preferences or by posing a series of guided questions to the user about the user's intended use for the new product.

In another embodiment, a Virtual IT Assistant includes an interaction services module that is configured to allow a user to interact with the Virtual IT Assistant over multiple communications channels. An application services module is provided for carrying out management functions relating to managing the user's personal electronics environment. A consumer services module is provided for managing the relationship between the Virtual IT Assistant and the user, and a data stores and servers module is provided for storing and accessing user and product data associated with managing the user's personal electronics environment. Next, a data services module is provided for processing data associated with the management functions performed by the Virtual IT Assistant. Finally, an integration services module is provided for transferring data between the various service modules of the Virtual IT Assistant.

In yet another embodiment, a method of managing an electronics environment is provided. The method includes compiling a user's electronics environment profile. The user's electronics environment profile identifies the electronic components within the electronics environment, and includes interconnection data identifying the interconnections between the various electronic components within the user's electronics environment. The user's electronics environment profile may also include configuration data and operating parameter values for various operating parameters associated with the electronic components. The method further includes establishing a communication channel between the user and a remote assistant. Once the communication link is established, various services may be delivered from the remote assistant to the user. These services may include purchase decision support, customized new product installation instructions, new product recommendations and ancillary product suggestions.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

Fig 1 is a block diagram showing a plurality of communications channels that may be established between a user and a virtual IT assistant;

Fig. 2 is representative of a personal electronics environment;

Fig. 3 is an example of a connection diagram that may be generated in conjunction with customized installation instructions by a virtual IT assistant;

Fig. 4 is a block diagram of a communications architecture for a virtual IT assistant; and

Fig. 5 is a block diagram of a service-oriented architecture for implementing an embodiment of a virtual IT assistant.

### DETAILED DESCRIPTION OF THE DRAWINGS AND THE PRESENTLY PREFERRED EMBODIMENTS

The present invention relates to a unified support system for managing a user's personal consumer electronics environment. The unified support system is adapted to help the user manage his or her entire personal electronics ecosystem, including multiple components from a variety of different manufacturers. The system supports a wide of range hardware, software and network configurations, as well as a vast universe of accessories, optional add-on products, and the like. The unified support system employs a multi-modal interface incorporating multiple communication channels for interfacing with a system user. The multi-modal interface provides the utmost flexibility, allowing the user to interact with the system substantially anywhere, anyhow, anytime. Product manufacturers, retailers, and other product and service providers may also interface with the unified support system to provide accurate and up-to-date information regarding available products and services. The unified support system provides seamless integrated information technology (IT) management functions to the user.

From a user's perspective, the unified support system may be considered a Virtual IT Assistant that is always available, has intimate knowledge of the user's personal electronics environment and usage habits, and has access to the compatibility and configuration requirements of a vast universe of additional products; components, accessories, software programs, services, and other IT related products and services that the user may wish to add to his or her personal electronics environment. With detailed knowledge of the user's personal electronics environment and of other available products and services, the Virtual IT Assistant may perform a number of functions to help manage the user's electronics environment.

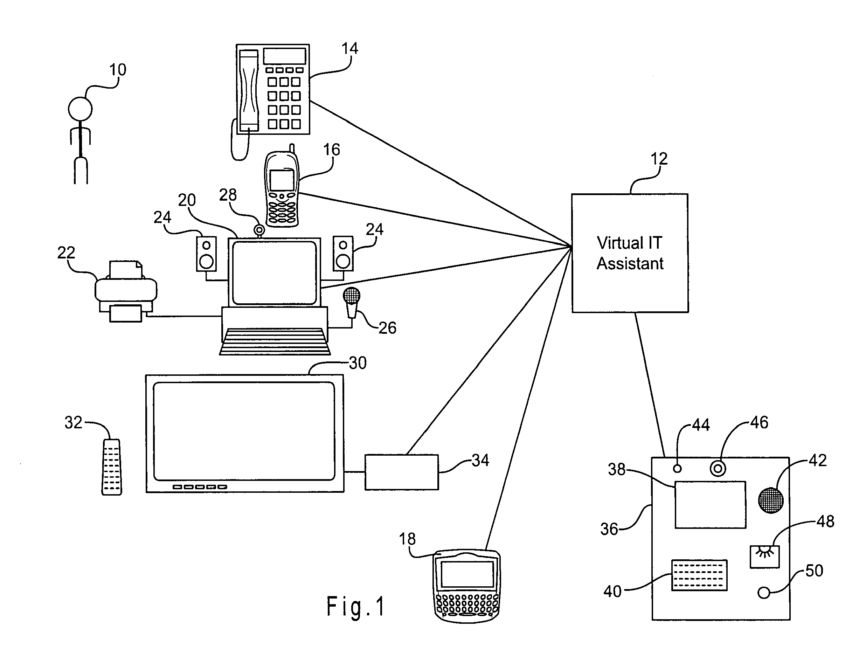

FIG. 1 is a block diagram showing some of the communications channels through which a user 10 may interact with a Virtual IT Assistant 12. The user 10 may interact with the Virtual IT Assistant 12 via a traditional land-line telephone 14 or through a wireless mobile telephone 16. In either case, the user 10 may contact the Virtual IT Assistant 12 by dialing a specified telephone number associated with the Virtual IT Assistant and interacting with an interactive voice response (IVR) system or a live customer service representative (CSR). Furthermore, an IVR system may have options allowing a user to transfer to a CSR if desired. Using a wireless cell phone 16, the user 10 may alternatively choose to communicate with the Virtual IT Assistant via text messaging or through a browser interface provided by the user's wireless telephone service provider. If the mobile phone 16 is equipped with a digital camera, the user 10 may capture digital images and transmit them to the Virtual IT Assistant via the wireless network using the multi-media service (MMS) or some other appropriate protocol. The Virtual IT Assistant 12 may likewise transmit digital images to the mobile phone 16 to be displayed on the mobile phone's LCD display. If the mobile phone 16 is equipped with an Radio Frequency Identification (RFID) reader, the user 10 may capture product information from product RFID tags and transmit them to the Virtual IT Assistant 12 via the wireless network. A PDA or wireless email terminal 18 may provide yet another wireless communication channel between the user 10 and the Virtual IT Assistant 12.

The user 10 may also interface with the Virtual IT Assistant 12 via a personal computer 20 over an Internet connection. Over the Internet, the user 10 may communicate with the Virtual IT Assistant 12 through an interactive website associated with the Virtual IT Assistant 12. In addition, the user 10 may communicate with the Virtual IT Assistant through an integrated desktop application that resides on the personal computer 20 and connects with the Virtual IT Assistant 12 through an Internet connection. The user may also communicate by email, by instant messaging, or other network communications protocols over the Internet. Computer peripherals such as a printer 22, speakers 24, a microphone 26 and a web camera 28 may further increase the interface options available to the user 10 using the computer 20.

In another alternative, the user 10 may interface with the Virtual IT Assistant 12 through a television 30 and an interactive set-top box 34 or similar broadband cable or DSL interface component. Images and text may be displayed on the television screen and voice messages may be played over the television's audio channel. The user 10 may enter commands and respond to prompts from the Virtual IT Assistant through the set-top box 34 using an interactive remote control device 32.

Yet another communications channel may be provided between the user 10 and the Virtual IT Assistant 12 in the form of an in-store kiosk 36. A kiosk 36 may be placed, for example, in a retail outlet where consumer electronics are sold. A typical in-store kiosk 36 may include many interface options for allowing the user 10 to interact with the Virtual IT Assistant 12. For example, the kiosk 36 may include an LCD or other type of display 38 for displaying still images, video and text. The kiosk 36 may further include any number of different user input/output devices, including a keyboard 40; a speaker 42; an audio microphone 44; a camera 46; a bar code reader or RFID reader 48 for reading product bar codes or RFID tags; a mouse, trackball, or some similar pointing device 50; and the like.

In order to effectively manage a user's electronics environment, the Virtual IT Assistant 12 stores detailed knowledge of the user's electronics environment. The Virtual IT Assistant may store a user profile that includes a complete inventory of the electronic components that form the user's personal electronics environment. The inventory may include the make and model of the various electronic components in the user's electronics environment; where they are located within the user's home; how they are connected to one another; where and when they were purchased; the terms and conditions their warranties and when they expire; what common hardware, installation, or usage problems may occur with the various components and the steps necessary to diagnose and fix those problems; each component's repair history and current system health; and the various settings, dimensions, firmware versions, parameters and configuration data for each component. The inventory may even include the various software packages loaded on the user's computer, the set-up parameters and passwords of such software packages, the patch levels and configuration settings of such software packages, the location of user created or downloaded data and media, the backup path and last backup date for the user's data and media, the frequency spectrum employed by the user's wireless devices, the historical performance of the broadband connection, the configuration of network routers, network addresses, input/output port configurations, and so forth. The user profile may also include information about the user's interactions with the components and software, such as frequency of use, date last used, duration of time used, content created or consumed by the components and software, maintenance schedule, and so forth.

The information regarding the user's personal electronics environment may be gathered during an initial survey of the user's electronics environment. The Virtual IT Assistant may provide a web based interactive survey that may be accessed through the user's web browser to guide the user through the initial survey. The user, who may be an individual consumer or a household of individuals, may enter the data via the interactive survey to be stored in his or her user profile. The interactive survey may also exist as an integrated desktop application running on the user's computer 20. In this case, the interactive survey application may interact with the Virtual IT Assistant, detect devices in the user's home network that utilize the Universal Plug and Play (UPnP) protocol standard, and monitor user behavior and system alerts. After the initial survey is complete, it is assumed that new components added to the user's electronics environment or changes made to the existing configuration will be carried out in conjunction with the Virtual IT Assistant 12 so that the Virtual IT Assistant 12 will maintain and have access to a comprehensive record of the user's personal electronics environment and how it is set up, even as the user's personal electronics environment expands, changes, and evolves. Armed with this detailed knowledge of the user's personal electronics environment, the Virtual IT Assistant is in a position to perform myriad functions to help the user manage his or her personal electronics environment.

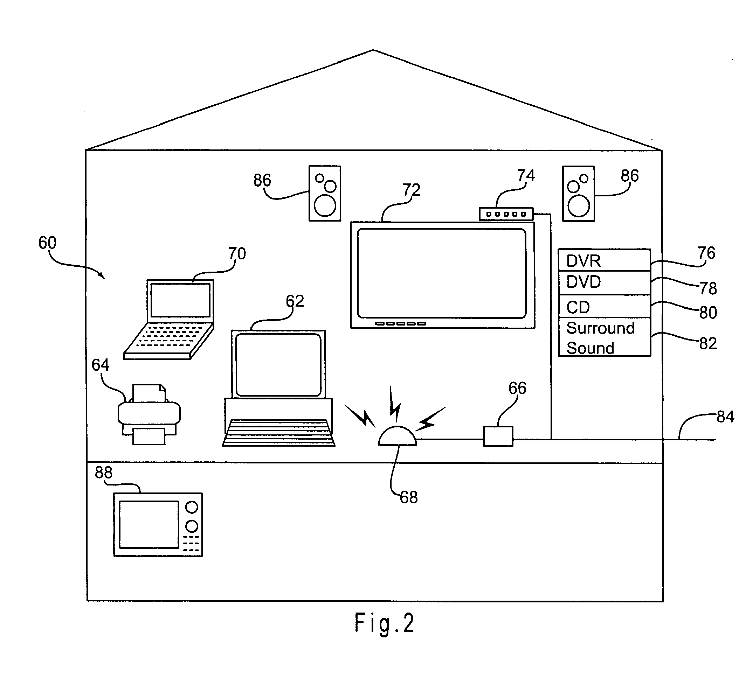

In order to describe the various management functions and services performed by the Virtual IT Assistant 12 we will consider a representative user's personal electronics environment. Fig. 2 shows an example of a typical user's personal electronics environment 60. The user's personal electronics environment 60 includes a desk top computer 62 and a number of computer peripherals including a printer 64, a network modem 66, and a wireless network router 68. The user also may have a lap top computer 70 adapted to access the user's in-home wireless network via the wireless router 68. The user's electronics environment 60 may further include an entertainment system for providing audio and video entertainment. The entertainment system may include a number of interconnected components. For example, an entertainment system may include a large screen television 72, an interactive set-up box 74 for decoding broad band cable TV signals, a digital video recorder 76, a DVD player 78, a CD player 80, and a surround sound amplifier/receiver 82. A video input signal 84 may be received into the house via a broadband cable connection, a broadband DSL connection, a satellite dish antenna, or from some other source. The modem 66 may be a cable or DSL modem such that the broadband connection 84 may provide Internet access as well as TV programming.

Returning to the entertainment system, the set-top-box 74 may be provided for processing the received television signal 84 and for providing interactive communications with a video content provider. The digital video recorder (DVR) 76 may be installed for recording broadcast video content for later playback on the television 72. The digital video disc (DVD) player 78 may be included for playing digital video discs. The compact disc (CD) player 80 may be included for playing music via the entertainment system. Alternative audio sources may also be provided. For example, a node on the in-home wireless network may be connected to the entertainment system 70 so that digital audio content stored on the home computer 62 may be played over the entertainment system 70. The surround sound amplifier/receiver 82 may be included for playing surround sound audio in conjunction with video content and for playing music and other audio content over audio speakers 86. The DVR, the DVD player, the CD player, the surround sound amplifier 82, and the TV 72 may all be interconnected in various configurations for purposes of receiving, playing, and recording audio and video content. In addition to the large screen TV 72, the user may have a second TV 88 located elsewhere in the house such as in a bedroom or in the basement of the house.

The personal electronics environment 60 shown in Fig. 2 is just one example of the interconnectivity of today's consumer electronics and the complexity that many people face in setting up their in-home electronics environments. Of course, some people may have more or less complex electronics environments than that shown in Fig. 1. However, regardless of the current state of an individual's in-home electronics environment, the constant introduction of new products and services, the development of new communications techniques, and new methods for delivering content will likely cause most people's in-home electronics environments to become more complex in the future rather than less.

An important role of the Virtual IT Assistant 12 is to educate and provide information to the user regarding the user's existing components, the configuration of his or her personal electronics environment, as well as possible additions and other changes the user may wish to make to his or her current setup. With multiple communications channels available to the user, the user may access the Virtual IT Assistant and receive information substantially anywhere the user happens to be, at any time, and in any manner that happens to be the most convenient at the time.

One aspect of educating the user and providing useful information is providing guided purchase decision support. For example, assume that the user whose personal electronics environment 60 is shown in Fig. 2 is thinking about purchasing a video gaming console. The user may be at home researching video game consoles online using the desk top computer 62. The user may contact the Virtual IT Assistant 12 via a webpage using the web browser on his or her home computer 62. With the help of the Virtual IT Assistant 12, the user may gather information on a number of different gaming devices from a number of different manufacturers. Some devices may be more compatible with the user's existing electronics environment 60 than others. For example, some devices may come complete with everything necessary to interconnect with the user's existing components, whereas other devices may require additional interface components, such as cables, adaptors, and the like. Furthermore, compatibility of the various devices may depend on how the user intends to use the device. For example, if the user wanted to purchase additional audio speakers to be placed in another room of the house, longer length interface cables may be required, or if the user wanted to purchase a new TV to fit in his entertainment center, the dimensions of the screen may influence the purchase decision. In another example, the interconnection requirements may be significantly different if the user is planning to use the video game console in conjunction with the second TV 88 located in the bedroom or basement of the house versus if the user plans to play video games on the large screen TV 72 with surround sound audio, and plans to use the gaming console to participate in on-line gaming activities over the Internet.

Accordingly, the Virtual IT Assistant 12 may inquire where and how the user intends to use the new gaming console. Assume that the user intends to use the video game console with the large screen TV 72, and plans to integrate the video game console with surround sound amplifier 82. The user responds to the Virtual IT Assistant's 12 queries, and upon receiving information on the gaming console's intended use, the Virtual IT Assistant 12 may identify a number of different products that will best meet the user's requirements. In addition to compatibility information, the Virtual IT Assistant 12 may provide purchase decision support in the form of product reviews, consumer reports, price comparisons, discounts based on household demographics, previous purchase history, or product bundling, and the like.

Extending the example further, suppose the user has already made a decision to purchase a particular video game console, and that the user has traveled to a retail outlet to purchase the product. The Virtual IT Assistant 12 can provide in-store purchase assistance to ensure that the user has picked out the right product and has all of the accessories necessary to hook up the video game console in the desired manner to his or her existing equipment. In addition to the user's profile, the Virtual IT Assistant 12 includes a large database of available consumer electronics equipment. The products for which compatibility and configuration data are available may be considered "known" products in that the Virtual IT Assistant 12 is aware of such products and has access to their compatibility and connection requirements.

A branding program may be instituted in order to increase awareness of the Virtual IT Assistant 12 and to promote products from manufactures who cooperate with the Virtual IT Assistant 12 program. Products for which compatibility and connection information are available to the Virtual IT Assistant 12 may be labeled or marked as being associated with the Virtual IT Assistant 12 program. At a store, or on-line, the user may look for a designated logo to identify products that are part of the program. The user may be assured that the Virtual IT Assistant 12 will be able to held integrate products bearing the designated logo into the user's electronics environment. In most cases, the consumer will opt for products that the Virtual IT Assistant 12 can help to install. Therefore, it will be in the manufacturer's interest to participate in the program.

A convenient feature of the Virtual IT Assistant 12 is that it can provide in-store purchase support for known products over a number of different communications channels. First, if the retail establishment is equipped with an in-store kiosk 36, (see Fig. 1) the user may contact the Virtual IT Assistant 12 by logging in at the in-store kiosk 36. The log in procedure may require entering a user name and password, swiping a magnetic membership card, swiping an RFID loyalty card, or any other mechanism for positively identifying oneself to the Virtual IT Assistant 12. Once logged in, the user may scan the barcode or RFID tag on the product he or she is interested in buying using the kiosk's bar code scanner or RFID reader 48 in order to identify the product for the Virtual IT Assistant 12. Once the user and the selected product have been identified, the Virtual IT Assistant 12 may access the user's personal electronics environment configuration data and the selected product's compatibility and interconnection data to determine whether the selected product is compatible with the user's existing set-up, or whether additional products such as cables, routers, wireless bridge adaptors, and the like, will be necessary to install the new product.

The Virtual IT Assistant 12 may send alternative product suggestions or may suggest additional products and accessories that the user will need to install and use the new product. For example, suppose the user intends to use the new video game console for participating in on-line games, and that the Virtual IT Assistant 12 determines that there are no open ports on the user's wireless router 68. The Virtual IT Assistant 12 may inform the user that he or she will not be able to use the gaming console to participate in online games unless the user also buys an Ethernet wireless bridge adaptor. Such information may be displayed on the kiosk's LCD display 38. If the user does not understand the information provided by the Virtual IT Assistant 12, the user might opt to talk to a CSR associated with the Virtual IT Assistant 12. The kiosk 36 may have provisions for contacting a call center where the user may speak with a live CSR via the microphone 44 and speaker 42. The kiosk 36 may even be adapted to provide video conferencing via the LCD display and a video camera 46 mounted on the kiosk 36. Video conferencing could allow a live agent to demonstrate features of a product before the user decides to buy. Alternatively, the user could communicate with the agent via instant messaging, live email or some other internet communication protocol via the mouse 50, keyboard 40 and LCD display 38. In another alternative, a pre-recorded demonstration could be downloaded and displayed on the kiosk's LCD display 38 in response to user inquiries.

The Virtual IT Assistant 12 may also communicate special promotional offers and cross-selling opportunities to the user. For example, in the case of the video game console, the manufacturer may offer a separate wireless hand held controller for use with the system. The manufacturer may want to offer the wireless controller at a special discounted price to consumers purchasing new video game consoles. This special offer may be communicated to the user via the Virtual IT Assistant 12. Similar promotions offered by the retailer or other third parties may also be communicated to the user by the Virtual IT Assistant 12. For example, the retailer may wish to offer special prices on video games to customers who purchase new video game consoles. Again, such offers may be communicated to the user via the in-store kiosk 36 or any of the other mobile communications channels available to the Virtual IT Assistant 12.

If the user happens to be at a retail outlet that is not equipped with an in-store kiosk 36, the user still has many options for accessing the Virtual IT Assistant 12 and availing himself or herself of the in-store purchase support offered by the Virtual IT Assistant 12. For example, in lieu of the in-store kiosk 36, the user may contact the Virtual IT assistant 12 by calling a specified contact number using his or her mobile telephone 16. In this case, the user may log onto the Virtual IT Assistant 12 via an interactive voice response system (IVR), or the like. If the user has a camera enabled phone, the user may take a picture of the barcode of the desired product or of the entire product packaging and send the image to the Virtual IT Assistant 12 via the cellular network using the multimedia message service (MMS) protocol, or the like. The Virtual IT Assistant 12 may include provisions for reading the bar code from the image, or simply identifying the product based on the product packaging. Once the Virtual IT Assistant 12 has identified the product, it may perform the same functions as described above with regard to the kiosk interaction. The only difference in this transaction is the interface between the Virtual IT Assistant 12 and the user 10. In this case additional product recommendations and other information that would have been displayed visually on the kiosk LCD display 38 may be sent to the user's mobile phone 16 via text message, MMS, Wireless Application Protocol (WAP) website, or some other wireless protocol. Alternatively, pre-recorded voice messages may be sent via the Virtual digital assistant's IVR system or a live CSR could be connected directly to the user's mobile phone. In short, the Virtual IT Assistant 12 can provide as much information as necessary to help clarify the user's purchase decision, and to ensure that the user has everything he or she needs to add the new product to his or her personal electronics environment, and such information may be delivered over the most convenient communication channel available.

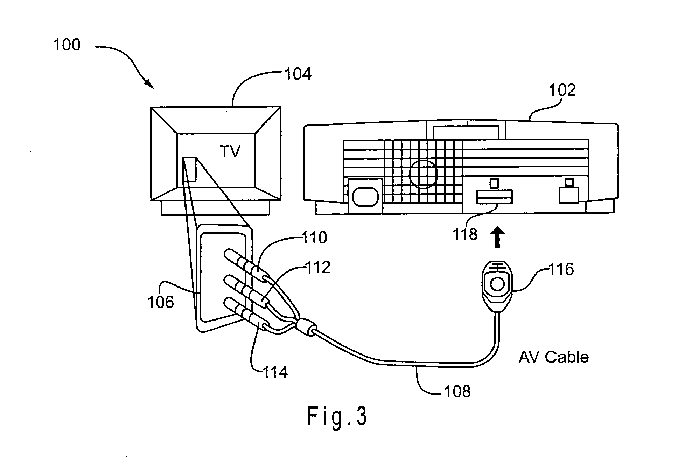

Another role performed by the Virtual IT Assistant 12 is to assist in the installation and integration of new products into the user's personal electronics environment. When the user purchases a new product, such as the video game console described above, the Virtual IT Assistant 12 may prepare customized installation instructions for installing the new device. For example, connecting the video game console to the entertainment center may require connecting video cables to the television 72, audio cables to the surround sound amplifier 82, an internet cable to the computer 62 for online gaming or accessing the user's wireless network via the wireless router 68. Because the components of the user's existing electronics environment and the new video game console are all known to the Virtual IT Assistant 12, the Virtual IT Assistant 12 is capable of preparing detailed instructions on how to connect the new device to all of the existing components. The instructions may include video demonstrations or detailed pictures of the back panels of each of the devices, including the cables and connectors that must be plugged into the various devices. Fig. 3, for example, shows a connection diagram 100 for connecting a video game console 102 to a television set 104. The connection diagram 100 may be generated from connection data stored in the Virtual IT Assistant 12 database corresponding to the user's big screen TV 72 (Fig. 2) and the newly purchased video game console. The connection diagram 100 shows the back panel of the video game console 102 and a detail 106 of the back panel of the TV 104. The connection diagram 100 further includes an AV cable 108 for connecting the audio and video output signals from the video game console 102 to the audio and video input on the TV 104. The diagram shows which connectors 110, 112, 114 of the AV able are to be inserted into the various input jacks on the television 104, and where the connector 116 on the opposite end of the AV cable plugs into a connector 118 on the back panel of the video game console 102. The connection diagram 100 may be accompanied by additional diagrams for connecting the video game console 102 to the surround sound amplifier and other components, alternative configurations, and so forth. The connection diagram may be further accompanied by written step by step instructions for connecting the video game console 102 to the TV 104 and/or other components, as well as initializing and starting up the components, loading software, and the like.

The most significant aspect of the connection diagram 100 is that the Virtual IT Assistant 12 has access to the back panel layout and connectivity requirements of both the user's existing television set 104 and the new video game console 102 that the user has just purchased. The Virtual IT Assistant 12 creates customized connection instructions specific to these particular components. Also, the customized instructions may be generated specifically for the user's intended use. For example, referring back to Fig. 2, the customized connection instructions might be significantly different if the user intends to connect the new video game console 102 to the stand alone television 88 in the user's basement, rather than the big screen TV 72 and the surround sound amplifier 82 in the user's entertainment center.

Again, the flexible interface of the Virtual IT Assistant 12 allows the customized installation instructions to be delivered to the user in multiple ways depending on the user's preferences. For example, the customized installation instructions could be delivered to the user's TV via the broadband cable or DSL interface 84 and the interactive set-up-box 74, they could be delivered to the user's home computer 62 via the internet and modem 66 to be displayed on the computer monitor, or they could be printed via the printer 64. The installation instructions could also be sent to the user by email, or the user could access a secure web page created for displaying the user's customized installation instructions. For devices with Universal Plug and Play (UPnP) network protocol compatibility, the installation process can be further supported by the automatic discovery and configuration of the device once it has been connected to the user's home network.

In addition to passive instructions, the Virtual IT Assistant 12 may also be adapted to provide active assistance. For example, suppose the user completes the installation instructions but cannot get the gaming device to play video games on the TV, or perhaps the game has been working properly but suddenly stops working. The user may contact the Virtual IT Assistant 12 for troubleshooting assistance. The Virtual IT Assistant 12 may be adapted to provide automated troubleshooting responses to common operating problems for the various components stored in the Virtual IT Assistant's 12 database. If the user cannot solve the problem at this level, the Virtual IT Assistant 12 may escalate the troubleshooting interaction to a higher level of service. Beyond providing simple self help trouble-shooting suggestions such as checking to ensure that all necessary components are powered up, checking all I/O connections, and the like, the Virtual IT Assistant 12 may access the device to review operating parameters, alert messages, error logs and so forth in a further effort to diagnose the problem. If the problem still cannot be resolved the troubleshooting interaction may be escalated to yet a higher level of assistance. For example, the interaction could be forwarded to a call center or other service facility where the user could talk with a live technician. The technician could contact the user via telephone, instant messaging, internet chat, email or any of the other multiple communications channels offered by the Virtual IT Assistant 12. The technician would have access to all of the user's configuration data, and could be provided with information regarding all of the troubleshooting steps that had already been performed. Such contextual awareness allows the technician to be much more efficient in diagnosing and solving the problem.

It is possible that a device failure or some other significant problem may be of a type that cannot be resolved by a technician remotely. In this case a further service escalation may be required. The technician may schedule a service call in which a technician is scheduled to travel to the user's premises to try to resolve the problem. Such a scaled service response may correspond to a tiered service plan where users pay different amounts for different levels of service, or where additional fees are charged for higher levels of service, as the troubleshooting interaction is escalated from one level to the next.

The services offered by the Virtual IT Assistant 12 described thus far have been of a reactive nature. The user contacts the Virtual IT Assistant 12 and the Virtual IT Assistant 12 responds. However, the Virtual IT Assistant 12 may be adapted to perform proactive user support functions as well. For example, the Virtual IT Assistant 12 may be provided with dynamic access to the computer network within the user's home. The Virtual IT Assistant 12 may gather data from "intelligent" components such as the user's computer 62, the set-top box 74, or other components. With access to the user's network the Virtual IT Assistant 12 can monitor many aspects of the user's personal electronics environment and take proactive steps for managing and maintaining the entire system. Proactive management steps may range from simple tasks like monitoring the toner level in the user's printer and ordering new toner cartridges when toner is running low, power management and network security functions, to automated backups of the user's media and data. With access to both the user's configuration and operating data as well as a vast database of additional products available in the marketplace, the Virtual IT Assistant 12 can monitor the market for upgrades, patches, and add-ons that would enhance the user's IT environment and can make recommendations for adding new products and services, changing configurations, and so forth. In addition to providing valuable services to the user, a proactive market watch function provides excellent up-selling and cross-selling opportunities for manufactures. This may provide additional incentives for manufactures to participate in the Virtual IT Assistant branding program. The Virtual IT Assistant 12 may further act to register warranties for new components, monitor the status of service and/or purchase order inquiries, manage moves and reconnects, handle returns and substitutions, and so forth.

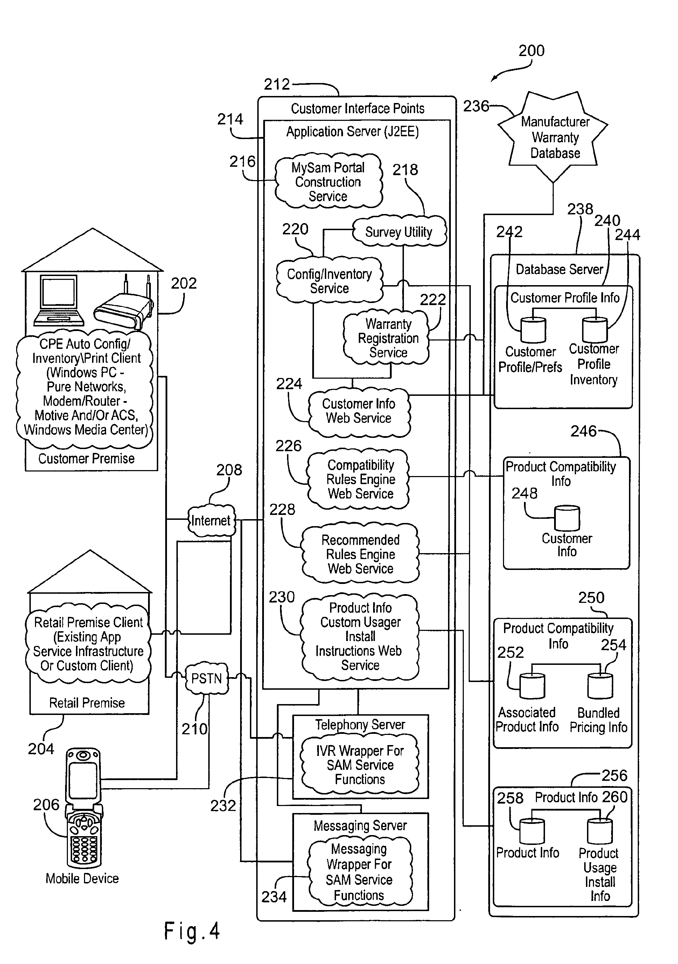

The block diagram 200 of Fig. 4 shows an overview of the communication architecture of a unified support system for managing a user's personal electronics environment. The left side of the block diagram shows the various communications channels available for the user to interact with the system. These include the various devices within the user's home 202, in-store equipment 204 located at a retailer's premises as well as personal mobile devices 206. The devices within the user's home may include a traditional telephone, computer, customer premises equipment (CPE) such as a cable or DSL Modem, a cable or satellite TV set-top-box, or the like. The retailer premises equipment may include an in-store kiosk as described above, point-of-sale equipment linked to the Virtual IT Assistant 12 via a network connection, an application server, or other back end systems for communicating with the Virtual IT Assistant 12, and other inventory and sales support systems. Finally, mobile devices 206 may comprise cell phones, wireless email terminals, PDAs, and the like. The user's in-home equipment may interface with the Virtual IT Assistant 12 via the internet 208, mobile 3G network, and/or via a traditional PSTN network, or any other communication medium capable of transferring the necessary data between the user's home and the Virtual IT Assistant 12. Similarly, a user's mobile device may access the Virtual IT Assistant 12 via the internet 208 or via the PSTN network. The in-store equipment 204 will typically interact with the Virtual IT Assistant 12 over the internet 208.

A number of customer interface points 212 are shown. The various interface points 212 include an application server 214 a telephony server 232 and a messaging server 234. The particular customer interface point accessed by a customer depends on what the customer is trying to accomplish and the communication channel selected by the customer for contacting the Virtual IT Assistant 12. For example, if the customer is contacting the Virtual IT Assistant 12 for the first time over the Internet to set up an account, the user's communications will be routed directly to the application server 214. A portal construction service 216 running on the application server 214 will perform the requisite steps for establishing a new user account. Additional services running on the application server 214 that a user may interact with include a survey utility 218, a configuration/inventory service 220, a warranty registration service 222, and a customer information web service 224. Additional services running on the application server 214 may include a compatibility rules engine web service 226, a recommendation rules engine web service 228, and a product information/customer usage installation instructions web service 230. The customer does not interact directly with these latter services, however, these services interact with the various databases associated with the Virtual IT Assistant 12 in order to pull data necessary to perform the various functions provided by the Virtual IT Assistant 12 for the user. The telephony server 232 routes communications received via the PSTN or wireless telephone network 210 to the application server 214 and *vice versa.* The messaging server 234 routes SMS text messages between the application server 214 and the user.

The services running on the application server 214 interact with a database server 238 to store and retrieve user data, product data, configuration data, and so forth. The services may also interact with a separate manufacturer warranty database 236. The data base server 238 accesses a customer profile database 240 which includes customer profile and preferences records 242, and household profile inventory records 244. The database server 238 further accesses a product compatibility information database 246, a product recommendation information database 250, and a product information database 256. The product compatibility information database 246 stores compatibility records 248. The product recommendation information database 250 stores product information records 252, and bundled pricing information records 254. The product information database 256 stores product information records 258 and product usage and installation records 260.

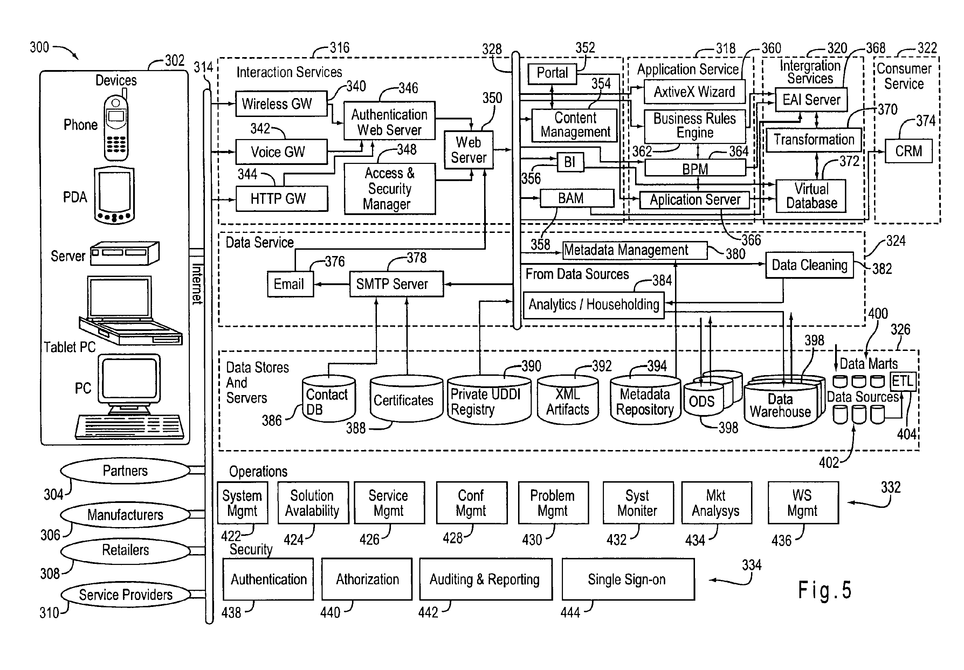

Fig. 5 is a detailed block diagram 300 of the systems supporting a Virtual IT Assistant 12 according to an embodiment of the invention. Various parties that interact with the Virtual IT Assistant 12 are shown along the left side of the diagram. Among the parties who interact with the Virtual IT Assistant 12 are consumers 302, partners 304 such as third party field service providers or others who may be enlisted in providing any type of user support in conjunction with the virtual IT assistant, component manufacturers 306, retailers 308, and service providers 310. As has been discussed, consumers 302 may interact with the Virtual IT Assistant 12 using a number of different devices. A single communication channel 314 is shown in Fig. 5 for allowing the various parties to interact with the Virtual IT Assistant 12. In practice however, the communication channel 314 may include the multi-model communication interface described above to provide the utmost flexibility for all parties interacting with the Virtual IT Assistant 12.

The Virtual IT Assistant is based on a Service Oriented Architecture (SOA). An SOA delivers distinct business capabilities or products through the orchestration of reusable, standards-based, interoperable, autonomous business functions and systems. These are primarily delivered through Web services. The technologies underlying an SOA include a central business process management engine, a centralized service repository and widely dispersed Web services standards. These elements help to replace traditional point-to-point integration, manual processes, and hard coded work flows and processes. The elements comprising the SOA depicted in the block diagram 300 of Fig. 5 may comprise a combination of hardware, firmware and software components. Processes may be carried out on a computer processor, a distributed network of computer processors, dedicated hardware circuits, programmable hardware circuits, and the like. Data may be stored on one or more data storage devices logically organized according to the various data storage functions described in the block diagram 300.

The SOA of the embodiment of a Virtual IT Assistant 12 shown in Fig. 5 includes interaction services module 316, application services module 318, integration services module 320, consumer services module 322, data services module 324, and data stores and server services module 326. An enterprise service bus (ESB) 328 provides a communications backbone that allows the various services modules to communicate with one another in order to integrate the services. The ESB 328 supports intelligently directed communications and mediated relationships between loosely coupled and decoupled business components. The ESB can be implemented, for example, in BEA AquaLogic Service Bus 2.5.

The interaction services 316 support all of the various modes of communication supported by the Virtual IT Assistant. Accordingly, the interaction services 316 may encompass the various customer interface points 212 outlined in Fig. 4. For example, in the embodiment shown in Fig. 5, the interaction services module 316 includes a wireless gateway 340, a voice gateway 342, and an HTTP gateway 344 for communicating with external parties. The wireless gateway 340 is a computer networking device that routes data packets between the Virtual IT Assistant 12 and GSM and GPRS wireless devices using WAP, SMS, and MMS protocols. The voice gateway 342 is a computer networking device that terminates PSTN traffic from callers and retrieves voice and/or call XML scripts from a Web server to provide interactive voice response and other services for a party calling the Virtual IT Assistant 12. The HTTP gateway 344 is an integrated edge security gateway that handles Internet HTTP traffic. The HTTP gateway 344 helps protect the Virtual IT Assistant 12 environment from Internet-based threats such as hackers and viruses, while providing users with fast and secure remote access to applications and data.

The interaction services module 316 further include a Web authentication server 346, an access and security manager 348 and a Web server 350. The authentication server 346 performs authentication functions to verify the identity of users and to allow users to login to the Virtual IT Assistant 12 application. The access and security manager 348 provides a single point for managing all of the applications and resources of the Virtual IT Assistant 12 that a user can access. The Web server 350 is a computer server that serves Virtual IT Assistant 12 content, Web pages and associated files, to authenticated users.

In addition to the interaction services components facilitating communications with the external world, the interaction services module 316 also includes a number of components for accessing the other services of the Virtual IT Assistant SOA. These include a portal 352, a content management server 354, a business intelligence (BI) module 356, and a business activity monitoring (BAM) module 358. The portal 352 is a Web site that serves as the launch site for Virtual IT Assistant services such as inventory management, product selection, warranty management, and the like. The portal may comprise, for example, the BEA WebLogic Server 9.2. The content management server 354 manages the evolutionary lifecycle of digital content by managing and tracking the location of content in a repository. The content management server 354 applies workflows and enables the reuse of content and collections of content. The content management server 354 may be a Vignette Content Management 7.3 server. The business intelligence (BI) module 356 gathers, stores, analyzes and provides access to data. The BI server 356 improves Virtual IT operations through canned reports, decision support and data mining. The BI server 356 may be BusinessObjects XI or Cognos 8 Business Intelligence. Finally, the BAM module 358 monitors all business processes and Virtual IT Assistant activities through the use of specialized software components for real-time analysis, reporting and monitoring. The BAM module 358 may be provided by webMethods Fabric 7.

Application services module 318 includes a group of services that deliver the user services of the Virtual IT Assistant, such as inventory management, product purchase decision support, warranty management, electronics environment monitoring and maintenance, etc. The application services apply application logic to the data resident in the data stores, primarily around the customer and product databases, to provide proactive and reactive user support. The application services include an Active X Wizard 360, a business rules engine 362, a business process management (BPM) module 364 and an application server 366. The Active X Wizard 360 is an application component installed on devices in the consumer's home network. The Active X Wizard 360 monitors the performance of the consumer's components and provides status and alert messages to the Virtual IT Assistant 12 application server 366, for providing proactive and reactive device maintenance and support. The business rules engine 362 is a software application that manages business level rules. (An example of the type of rules enforced or managed by the business rules engine 362 is a rule stating that when a user's directory of photos has not been backed up in over two weeks, the Virtual IT Assistant should either automatically backup the directory or send an alert to the user with the backup warning, depending on the user's preferences settings.) The BPM 364 is a tool for monitoring the execution of business processes. The BPM 364 allows managers to analyze the performance of business processes and make changes to the processes in real-time. The BPM 364 may be provided by Cognos 8, SAS 8, or BusinessObjects XI. The application server 366 provides the "glue" for the business applications and services. The application server 366 is the control center for the Virtual IT Assistant's services and capabilities. It is through the application server 366 that the Virtual IT Assistant 12 provides product purchase decision support, device management, customized installation and configuration instructions, trouble shooting assistance, inquiry status updates, upgrades, repair and replace assistance, warranty registration, maintenance, move assistance, returns, substitutions and the like. The application code may be written in Java or Microsoft.NET and the application server 366 may be provided by BEA WebLogic Server 9.2 or the Microsoft .NET 3.0 Framework on a Microsoft Windows server.

Next we look at the integration services module 320. The integration services are a group of services provided for integrating all of the disparate services comprising the Virtual IT Assistant 12. Integration services comprise an enterprise application integration server (EAI) 368, a transformation module 370, and a virtual database 372. The EAI server 368 comprises middleware for integrating legacy applications used for business process monitoring, business activity monitoring, and data mart adaptors. The EAI server may be provided by webMethods Fabric 7, SeeBeyond Integrated Composite Application Network Suite 5, or Microsoft BizTalk Server 2006. The transformation module 370 is used for message level transformations of files passed between applications using different formats, such as SAP, BAPI, X12, ROSSETTANET and so forth. The transformation module 370 may be provided by IBM WebSphere MQ 6.0 The virtual database 372 is an abstracted database layer which provides a single point of access for managing heterogeneous applications to allow ad hoc queries, fused data, and dynamic access. The virtual database may be provided by MetaMatrix Enterprise 5, or BEA Liquid Data for WebLogic 9.2.

Consumer services module 322 comprises customer relationship management (CRM) software 374. CRM software 374 manages pre-sale, post-sale and product support operations. The CRM software may be configured to maintain customer and contact databases and manage help desk and support lines and the like. The CRM software may be provided by SAP NetWeaver 6.40.

Next we turn to the data services module 324. The data services module 324 includes email 376, a simple mail transfer protocol server 378, a metadata management service 380, a data cleansing service 382 and analytics/householding software 384. Email 376 is a typical system for exchanging messages over the Internet. The SMTP server 378 is an application server used to send and receive email using a text-based protocol. The metadata management module 380 manages information about a particular dataset (metadata) that describes how, when and from whom data was received, created, accessed and/or modified, and how it is formatted. The metadata management module 380 may be provided by, for example, ASG-Rochade 6.0 Metadata Repository, or MetaMatrix Enterprise 5. The data cleansing service 382 is provided for transforming data from a first state into data having a predefined standardized format. For example, a data cleansing operation may be adapted to convert an apparently random sequence of ten numbers into a telephone number of the format (XXX) XXX-XXXX. Data cleansing software may be provided by, for example, Trillium Software System 7. Analytics/householding software 384 comprises programming that analyzes data concerning business activities and customer information. Analytics present data in a manner that allows better and quicker business decisions to be made. Householding is the grouping of individuals by household or other relationship patterns for purposes of grouping Virtual IT Assistant services. Analytics and householding 384 may be provided by Cognos 8 or BusinessObjects XI.

Finally, we turn to data stores and services 326. The data stores and services 326 include a contact database 386. The contact database 386 stores contact information for customer's using the Virtual IT Assistant 12. The contact information may include preferred contact methods and other preferences which are linked to the customer data store in the data warehouse 398. A certificates database 388 stores certificate data for establishing secure SSL-based transactions. The certificates database 388 contains information identifying the certificate issuer, the organization that owns the certificate, the public key, the period during which the certificate is valid, and the host name of the certificate, a private universal description discovery and integration (UDDI), registry 390 is an XML-based registry that provides a distributed directory of consumable Web services for the Virtual IT Assistant 12. XML artifacts database 392 stores XML constructs that are "building blocks" for XML-based transaction definitions in electronic information exchanges. A metadata repository 394 is a database of metadata that provides a consistent and reliable means of accessing data. The metadata repository may be provided by webMethods Fabric 7 or BEA AquaLogic Enterprise Repository 2.5.

Operational data stores (ODS) 396 are architectural constructs that support time sensitive, operational decision support applications. An ODS is centered on a business process and is application-specific. Data within an ODS are relatively fresh and current, with little or no historical data. ODS may be provided by, for example, Teradata Warehouse 8.2 or Oracle Database 10g. The data Warehouse 398 is an application neutral centralized, shared, architected solution for decision support systems. Major entities within the data warehouse 398 are grouped around customer/household and product. The data warehouse 398 may be provided, for example, by Teradata Warehouse 8.2 or Oracle Database 10g. Data Marts 400 are business process oriented sub centers of the Data Warehouse 398 in which data are organized for a particular set of usage requirements (e.g. for a marketing data base). The Data Marts 400, may be provided, for example by Oracle Database 10g. Finally, Data Sources 402 store the sources of data and connection information necessary for accessing the data (e.g. for product compatibility data, and the like). ETL 404 (extract, transform, load) provides for the bulk transfer and loading of large blocks of data. The ETL tool may be provided by, for example, Informatica PowerCenter 8.

Operations 332 comprise software and services for managing the operation of the Virtual IT Assistant. For example, the software and services provided by Operations 332 may be used to make sure that the Virtual IT Assistant portal is always available and may include performance management software for call center agents to monitor how Customer Service Representatives handle the requests of incoming users who have installation questions, and so forth. Operations 332 include System Management 422. System management 422 includes the processes and tools that monitor the hardware, software, applications, networks, and operational elements in the environment. Solution availability 424 provides management of bandwidth availability, response times for routines and ad hoc queries, and response times for problem resolution (network down, machine failure, and so forth). Service management 426 is the component of Operation Support Systems responsible for service delivery, such as order management, inventory management, provisioning and activation, network topology management and maintenance, and stability/performance diagnostics of communication service providers and their networks. Configuration management 428 provides management of security features and assurances through control of changes made to hardware, software, firmware, documentation, tests, test fixtures, and test documentation of an automated information system, throughout the development and operational life of a system. Problem management 430 provides a tool that minimizes the impact of problems affecting information system services and for tracking issues that may arise. System Monitoring 432 provides tracking software used for monitoring server activity/utilization. Market Analysis 434 performs systematic investigation of the growth in the composition of the Virtual IT Assistant 12 market. Finally, Web Service Management 436 is a service that enables querying multiple Web services in a unified and transparent fashion through an SQL-like interface.

Security functions 334 are provided to ensure that the Virtual IT Assistant remains a secure environment so that user information may not be stolen by hackers or other unauthorized personnel. The security functions 334 include authentication 438, authorization 440, auditing and reporting 442, and single sign-on 444. Authentication 438 provides security measures designed to establish the validity of a transmission, message, or originator, or a means of verifying an individual's authorization to receive specific categories of information. Authorization 440 is the process for determining what types of activities are permitted. Usually, authorization is in the context of authentication: once you have authenticated a user, they may be authorized to have different types of access or to perform different types of activities. Auditing and reporting 442 is the process of recording and reporting database activity and access to database objects as they occur in the database. Single Sign On 444 allows a user to log on once to a PC or network and access multiple applications and systems using a single password. The SOA 300 shown in Fig. 5 provides the services and data processing functions for providing a Virtual IT Assistant 12. The various service modules depicted in the SOA 300 are integrated to provide a unified support system for helping users manage their personal information technology environments. Furthermore, the SOA 300 provides a multi-modal interface to provide the utmost flexibility for communications between the users and the Virtual IT Assistant 12. Accordingly, there is provided a system for managing an electronics environment comprising: a first database storing user profile data including components and configuration data relating to the electronics environment; a second database storing product data including compatibility and interconnection data; and a processor adapted to compare the compatibility and interconnection data of a specified product with the components and configuration data relating to the electronics environment to determine whether the specified product is compatible with the electronics environment. Thus, the user can more effectively interact with the system, thus performing his task more efficiently and improving the overall operability of the system.

Particularly, the system further comprises a communications interface configured to allow a user to communicate with the system over a communications channel.

Particularly, the communications interface comprises a wireless gateway allowing the user to communicate with the system over a wireless communications channel.

Particularly, the communications interface comprises an HTTP gateway allowing the user to communicate with the system over the Internet.

Particularly, the system further comprises a cable or DSL modem for accessing the HTTP gateway via the internet.

Particularly, the communications interface comprises a PSTN gateway allowing the user to communicate with the system over a publicly switched telephone network.

Particularly, the communications interface comprises a multi-modal communications interface configured to allow a user to communicate with the system over a plurality of different communications channels.

Particularly, the communications interface comprises a remote kiosk having a plurality of input/output devices through which a user may communicate with the system.

Particularly, when the processor determines that the specified product is not compatible with the electronics environment, the processor is configured to determine additional products necessary to render the product compatible with the existing configuration.

Particularly, the processor is further configured to generate customized installation instructions for integrating the specified product with the electronics environment.

Particularly, the processor is further configured to register warranty data regarding the specified product with a manufacturer who produced the specified product.

Furthermore, there is provided a virtual IT Assistant comprising: an interaction services module configured to allow a user to interact with the Virtual IT Assistant over a communications channel; an application services module adapted to carryout management functions relating to managing a user's personal electronics environment; a consumer services module adapted to manage a relationship between the Virtual IT Assistant and the user; a data stores and servers module adapted to store and access user and product data associated with managing the user's personal electronics environment; a data services module adapted to process data associated with the management functions performed by the Virtual IT Assistant; and an integration services module adapted to allow data generated in one service module to be transferred and used by other service modules of the Virtual IT Assistant. Thus, the user can more efficiently perform his task thus achieving an improved overall operability.

Particularly, the interaction services module comprises a communications gateway for providing communications between the Virtual IT Assistant and a user over an external network.

Particularly, the gateway comprise one of a wireless gateway; a voice gateway; or an HTTP gateway.

Particularly, the interaction services module further comprises an authentication server adapted to authenticate the identity of a user communicating with the Virtual IT Assistant.

Particularly, the interaction services module further comprises an access and security manager adapted to control the functions and services that an authenticated user may access.

Particularly, the interaction services module further comprises a Web Server adapted to deliver content relating to managing a user's personal electronics environment to the user over the external network.

Particularly, the interaction services module comprises a portal adapted to invoke management functions of the Virtual IT Assistant relating to managing the user's personal electronics environment.

Particularly, the interaction services module comprises a content management server adapted to manage content associated with performing management functions relating to managing the user's personal electronics environment.

Particularly, the content management server is adapted to track locations where content is stored in a data repository, and to apply workflows to enable use and reuse of the content associated with the performance of management functions relating to managing the user's personal electronics environment.

Particularly, the interaction services module comprises a business intelligence module adapted to gather and analyze data for improving operation of the Virtual IT Assistant.

Particularly, the business intelligence module is configured to provide decision support and data mining functions and to provide pre-defined business intelligence reports.

Particularly, the interaction services module comprises a business activity monitoring module adapted to monitor business processes and data processing functions of the Virtual IT Assistant and to provide real-time analysis reporting and monitoring of such business processes and data processing functions.

Particularly, the application services module comprises an active X wizard adapted to be installed on a device associated with a user's personal electronics environment to monitor performance of the device and to report status and alert messages back to the Virtual IT Assistant.

Particularly, the application services module comprises a business rules engine for defining and implementing business level rules for performing the management functions relating to managing a user's personal electronics environment.

Particularly, the application services module comprises a business process management module adapted to monitor execution of business processes for performing the management functions relating to managing a user's personal electronics environment, in order to analyze and optimize the performance of the Virtual IT Assistant.

Particularly, the application services module comprises an application server adapted to provide applications for performing the management functions associated with managing a user's personal electronics environment.

Particularly, the application server is adapted to provide an application for performing at least one of the management functions comprising: product purchase decision support; upgrade/add-on support; device management; customized installation instructions; configuration; troubleshooting; inquiry status; repair and replace services, upgrades, warranty registration; move management; returns; and maintenance.

Particularly, the data stores and servers module comprises a contact database storing user contact information.

Particularly, the data stores and server module comprises a certificates database storing information regarding digital certificates for establishing secure SSL-based transactions with users.

Particularly, the data stores and server module comprises a private UDDI registry providing a distributed directory of consumable Web Services for the Virtual IT Assistant.

Particularly, the data stores and server module comprises an XML artifacts database storing XML building blocks for XML-based transaction definitions in electronic information exchanges.

Particularly, the data stores and servers module comprises a metadata repository for storing metadata that describes how, when and by which logical entity data are received, created, accessed or modified.

Particularly, the data stores and servers module comprises an operational data store storing data supporting time-sensitive operational decision support applications.

Particularly, the data stores and servers module comprises a data warehouse for centralized storage of customer, household and product data that may be accessed across the various services comprising the Virtual IT Assistant.

Particularly, the data warehouse includes one or more data marts, a data mart comprising a subset of the data warehouse data organized for a particular usage requirement.

Particularly, the data stores and servers module comprises a plurality of data sources.

Particularly, the data stores and services module comprises an extract, transform, and load module for receiving data, transforming the received data into a format appropriate for use by the Virtual IT Assistant, and loading the data into a data storage medium associated with the data stores and servers module.

Particularly, the data services module comprises an email server configured to exchange messages with a user over the Internet.

Particularly, the data services module comprises a simple mail transport protocol server for sending and receiving email messages using a text based protocol.

Particularly, the data services module comprises a metadata management module adapted to organize and store metadata in a metadata repository, the metadata comprising a data set describing how, when and by whom data was received, created, accessed, or modified, and how the data are formatted.

Particularly, the data services module comprises a data cleansing module adapted to transform data from a first format to a predefined standardized format.

Particularly, the data services module comprises an analytics/householding module configured to analyze data regarding business activities and customer information and to present such data in a concise manner for facilitating fast business decision processes.

Particularly, the integration services module comprises an enterprise application integration server adapted to integrate applications so that data may be shared across multiple applications.

Particularly, the integration services module comprises a transformation module for transforming files between applications using different formats.

Particularly, the integration services module comprises a virtual database configured to provide a single point of access to data for managing heterogeneous applications to allow ad hoc queries, fused data and dynamic access to data.

Particularly, the consumer services module comprises a customer relationship management module configured to manage contacts with customers.

Furthermore, there is provided a method of managing an electronics environment comprising: compiling a user's electronics environment profile, the profile identifying one or more electronic components within the electronics environment, interconnection data identifying connections between the electronic components, and configuration data identifying parameter values for various operating parameters associated with the electronic components; establishing a communication channel between a user associated with the electronics environment and a remote assistant, communicating at least one of purchase decision support; customized new product installation instructions; new product recommendations; and ancillary product suggestions from the remote assistant to the user over the communications channel, in accordance with the user's electronics environment profile. Thus, the user can more efficiently perform his task thus allowing for an improved overall operability.

Particularly, establishing a communication channel between a user and a remote assistant comprises constructing a multi-modal interface whereby the user may communicate with the remote assistant over a variety of communications channels.

Particularly, a communications channel comprises a land-line telephone connection.

Particularly, a communications channel comprises a wireless mobile telephone connection.

Particularly, a communications channel comprises small message service protocol messaging.

Particularly, a communications channel comprises multimedia service protocol messaging.

Particularly, a communications channel comprises simple mail and transport protocol email messaging.

Particularly, the communications channel comprises an interactive Web Site accessible by a Web Browser operating on a personal computer associated with a user.

Particularly, the communications channel comprises a broadband cable or DSL connection and an interactive set-top box associated with a user's television set.

Particularly, the communications channel comprises a voice over internet protocol (VOIP) telephone.

Particularly, the communications channel comprises a kiosk having a plurality of input and output devices allowing the user to interact with the remote assistant.

Particularly, the kiosk includes a barcode reader for reading bar codes on product packaging, and the method includes identifying a product based on a bar code read from the product's packaging.

Particularly, communicating purchase decision support comprises communicating whether a selected electronics product is compatible with the user's electronics environment based on the user's electronics environment profile.

Particularly, communicating purchase decision support comprises identifying additional products required to integrate a selected product into the user's electronics environment.

Particularly, communicating purchase decision support comprises suggesting complimentary products and enhancements relating to a selected product.

Particularly, communicating customized new product installation instructions comprises generating at least one connection diagram based on interconnection requirements of a selected new product and the interconnection data of the user's electronics environment profile.

Particularly, the method further comprises receiving notification that the user has purchased a new component to be added to the user's electronics environment, the remote assistant acting to register a product warranty with a manufacturer of the new component on the user's behalf.

Particularly, the method further comprises monitoring the user's electronics environment by the remote assistant, the remote assistant taking proactive steps to maintain optimal performance of the user's electronics environment.

Particularly, taking proactive steps to maintain optimal performance of the user's electronics environment comprises monitoring levels of consumable items and automatically ordering replacement consumable items when levels drop below a predefined threshold.

Particularly, the method further comprises providing troubleshooting assistance to help resolve technical problems with the user's electronics environment.

Particularly, providing troubleshooting assistance comprises providing a tiered response program in which a level of technical support delivered to the user is successively escalated to increased levels of support interaction as necessary to resolve the technical problem.

Particularly, a first level of assistance comprises the remote assistant sending pre-written troubleshooting suggestions to the user over the communication channel, the pre-written troubleshooting suggestions based on the user's electronics environment profile.

Particularly, a second level of assistance comprises the remote assistant establishing a communication link between the user and a live customer service representative.

Particularly, a third level of assistance comprises scheduling a service call for a technician to visit the user's electronics environment.

Particularly, the method further comprises the remote assistant generating instructions for dismantling and reconnecting the user's electronics environment in the same or a new configuration when the user moves the electronics environment to a new location.

Particularly, the method further comprises the remote assistant monitoring manufacturer bulletins relating to the electronic components in the user's electronics environment, and alerting the user when product upgrades are available.

Moreover, there is provided a computer program product, particularly embodied on a computer-readable storage medium, as a signal or as a data stream, comprising computer readable instructions, which when loaded and executed on a suitable system perform the steps of the above method or any particular embodiment thereof.

It is therefore intended that the foregoing detailed description be regarded as illustrative rather than limiting, and that it be understood that it is the following claims, including all equivalents, that are intended to define the spirit and scope of this invention.

## Claims

1. A system for managing an electronics environment comprising:
a first database storing user profile data including components and configuration data relating to the electronics environment;
a second database storing product data including compatibility and interconnection data; and
a processor adapted to compare the compatibility and interconnection data of a specified product with the components and configuration data relating to the electronics environment to determine whether the specified product is compatible with the electronics environment.

2. The system of Claim 1 further comprising a communications interface configured to allow a user to communicate with the system over a communications channel.

3. The system of Claim 2 wherein the communications interface comprises a wireless gateway allowing the user to communicate with the system over a wireless communications channel.

4. The system of Claim 2 or 3, wherein the communications interface comprises an HTTP gateway allowing the user to communicate with the system over the Internet, preferably further comprising a cable or DSL modem for accessing the HTTP gateway via the internet.

5. The system of Claim 2, 3 or 4, wherein the communications interface comprises a PSTN gateway allowing the user to communicate with the system over a publicly switched telephone network.

6. The system of any one of the preceding Claims 2 to 5, wherein the communications interface comprises a multi-modal communications interface configured to allow a user to communicate with the system over a plurality of different communications channels.

7. The system of any one of the preceding Claims 2 to 6, wherein the communications interface comprises a remote kiosk having a plurality of input/output devices through which a user may communicate with the system.

8. The system of any one of the preceding Claims, wherein, when the processor determines that the specified product is not compatible with the electronics environment, the processor is configured to determine additional products necessary to render the product compatible with the existing configuration.

9. The system of any one of the preceding Claims, wherein the processor is further configured to generate customized installation instructions for integrating the specified product with the electronics environment.

10. The system of any one of the preceding Claims, wherein the processor is further configured to register warranty data regarding the specified product with a manufacturer who produced the specified product.

11. A method of managing an electronics environment comprising:
compiling a user's electronics environment profile, the profile identifying one or more electronic components within the electronics environment, interconnection data identifying connections between the electronic components, and configuration data identifying parameter values for various operating parameters associated with the electronic components;
establishing a communication channel between a user associated with the electronics environment and a remote assistant,
communicating at least one of purchase decision support; customized new product installation instructions; new product recommendations; and ancillary product suggestions from the remote assistant to the user over the communications channel, in accordance with the user's electronics environment profile.

12. The method of Claim 11, wherein establishing a communication channel between a user and a remote assistant comprises constructing a multi-modal interface whereby the user may communicate with the remote assistant over a variety of communications channels.

13. The method of Claim 11 or 12, wherein a communications channel comprises an interactive Web Site accessible by a Web Browser operating on a personal computer associated with a user and/or a broadband cable or DSL connection and an interactive set-top box associated with a user's television set.

14. The method of any one of the preceding Claims 11 to 13, wherein a communications channel comprises a kiosk having a plurality of input and output devices allowing the user to interact with the remote assistant.

15. The method of any one of the preceding Claim 11 to 14, wherein communicating purchase decision support comprises communicating whether a selected electronics product is compatible with the user's electronics environment based on the user's electronics environment profile.

16. The method of any one of the preceding Claims 11 to 15, wherein communicating purchase decision support comprises identifying additional products required to integrate a selected product into the user's electronics environment.

17. The method of any one of the preceding Claims 11 to 16, further comprising monitoring the user's electronics environment by the remote assistant, the remote assistant taking proactive steps to maintain optimal performance of the user's electronics environment.

18. The method of any one of the preceding Claims 11 to 17, further comprising providing troubleshooting assistance to help resolve technical problems with the user's electronics environment.

19. The method of any one of the preceding Claims 11 to 18, further comprising the remote assistant monitoring manufacturer bulletins relating to the electronic components in the user's electronics environment, and alerting the user when product upgrades are available.

20. A computer program product comprising computer readable instructions, which when loaded and executed on a suitable system perform the steps of the method of any one of the preceding claims 11 to 19.
